# EUROPÄISCHE PATENTANMELDUNG

(11) **EP 0 852 964 A1**
(43) Veröffentlichungstag der Anmeldung: **15.07.1998**
(21) Anmeldenummer: 97108305.0
(22) Anmeldetag: 22.05.1997
(51) Int. Cl.: B01D 53/86, F25J 3/04

(54) **Katalytische Entfernung von Acetylen bei der Luftzerlegung**

(30) Priorität: 10.01.1997 DE 19700644
(71) Anmelder: Linde Aktiengesellschaft, 65189 Wiesbaden (DE)
(72) Erfinder: Rohde, Wilhelm, 81476 München (DE); Lassmann, Eberhard, Dr., 82049 Pullach (DE); Meilinger, Matthias, Dr., 81369 München (DE); Fritz, Peter, Dr., 82008 Unterhaching (DE); Häussinger, Peter, Dr., 81375 München (DE); Schödel, Nicole, Dr., 81477 München (DE); Wenning, Ulrike, Dr., 85757 Karlsfeld (DE)
(74) Vertreter: Zahn, Christoph

(57) **Zusammenfassung**

Die Erfindung betrifft ein Verfahren zur Entfernung von Acetylen bei der Tieftemperaturluftzerlegung. Dabei wird die Luft zunächst verdichtet, in mindestens einem umschaltbaren Wärmetauscher abgekühlt und anschließend in zumindest einer Destillationssäule zerlegt. Erfindungsgemäß wird Acetylen vor dem Eintritt der Luft in den Wärmetauscher bei einer Temperatur zwischen 70 und 130 °C, vorzugsweise zwischen 80 und 110 °C, katalytisch oxidiert wird. Wasser und Kohlendioxid werden dagegen im wesentlichen in dem Wärmetauscher aus der Luft entfernt.

## Beschreibung

Die Erfindung betrifft ein Verfahren zur Tieftemperaturluftzerlegung, wobei die Luft verdichtet, in mindestens einem umschaltbaren Wärmetauscher abgekühlt und anschließend in zumindest einer Destillationssäule zerlegt wird.

Zur Entfernung von Wasserdampf und Kohlendioxid aus der Luft werden Luftzerlegungsanlagen zum einen mit umschaltbaren Wärmetauschern, Regeneratoren oder Revex, zum anderen mit Molekularsiebadsorbern betrieben. Bei Anlagen, bei denen die Summe aus der produzierten Sauerstoff- und Stickstoffmenge weniger als 50 % der eingesetzten Luftmenge beträgt, hat der Einsatz von umschaltbaren Wärmetauschern den Vorteil, daß die störenden Bestandteile Wasserdampf und Kohlendioxid bei jedem Umschaltvorgang zwischen zugeführter, warmer Luft und kaltem Restgas aus dem Wärmetauscher entfernt werden.

Derartige Anlagen besitzen jedoch den großen Nachteil, daß Kohlenwasserstoffe, insbesondere Acetylen, nur unvollständig aus der Luft entfernt werden und sich im flüssigen Sauerstoff anreichern können. Überschreitet die Konzentration von Acetylen dessen Löslichkeitsgrenze, so kristalliert dieses aus und bildet ein sehr leicht entzündliches, explosives Gemisch. Aufgrund seiner geringen Löslichkeit in Sauerstoff sollte die Acetylenkonzentration daher 1 ppm nicht übersteigen.

In Anlagen mit umschaltbaren Wärmetauschern werden deshalb sogenannte Gasphasen-Adsorber in Kombination mit Umlaufadsorbern oder Drucksäulen-Adsorber in Kombination mit Umlaufadsorbern eingesetzt, welche bei tiefen Temperaturen Acetylen weitgehend adsorbieren. Diese Adsorber sind paarweise angeordnet, da sie nach einer bestimmten Betriebszeit zum Regenerieren umgeschaltet werden müssen.

Der Aufwand für den Betrieb derartiger Adsorber ist beachtlich, so daß nach Aufkommen der Molekularsiebe die Adsorber in den warmen Bereich der Luftzerlegungsanlage, d.h. vor die Wärmetauscher, eingebaut wurden. Diese Molekularsiebe adsorbieren nicht nur Acetylen, sondern auch Wasserdampf und Kohlendioxid sehr gut. Es ist daher nicht mehr notwendig umschaltbare Wärmetauscher für tiefkalte Flüssigkeiten zu verwenden.

Die Adsorptionswirkung von Molekularsieben ist stark von der Temperatur abhängig. Aus Wirtschaftlichkeitsgründen werden sie daher je nach Umgebungstemperatur zwischen 5 °C und 25 °C betrieben, so daß in der Regel eine Vorkühlung der aus dem Verdichter austretenden, zu zerlegenden Luft nötig ist. Als nachteilig wirkt sich auch der über dem Molekularsieb auftretende Druckverlust aus, der besonders während der Heizperiode des Regeneriergases den Energieverbrauch der Anlage erhöht. Zudem sind Molekularsiebe wesentlich größer als die Adsorber einer Anlage mit umschaltbaren Wärmetauschern, wodurch höhere Investitionskosten verursacht werden.

Hauptgefahrenquelle in kryogenen Luftzerlegungsanlagen ist das sich nur schlecht in Sauerstoff lösende Acetylen. Die anderen Kohlenwasserstoffe, wie Propan und Ethylen, die auch in Molekularsiebadsorbern nur begrenzt zurückgehalten werden, ebenso wie Methan und Äthan, die in Molekularsiebadsorbern fast gar nicht zurückgehalten werden, besitzen eine gute Löslichkeit in Sauerstoff. Eine Anreicherung dieser Kohlenwasserstoffe über ein zulässiges Maß hinaus wird in der Regel durch Entnahme einer bestimmten Flüssigkeitsmenge aus dem Hauptkondensator, der Hauptanreicherungsstelle, und anschließendes Verdampfen vermieden.

In dem Artikel "safe design and operation of LOW TEMPERATURE AIR SEPARATION PLANTS", Chem. Eng. Prog. Vol. Nr. 52, 11, Seite 441 bis 447 (1956), wird vorgeschlagen, in Luftzerlegungsanlagen, die in Gebieten stehen, in denen die Luft stark mit Acetylen verunreinigt ist (10 bis 30 ppm), das Acetylen katalytisch zu entfernen. Hierzu wird die heiße Luft nach dem Kompressor durch einen speziellen Katalysator geleitet, in dem der Acetylengehalt auf unter 1 ppm abgesenkt wird. Eine stärkere Erniedrigung der Acetylenkonzentration bis auf wenige ppb ist allerdings nicht möglich. Zudem arbeitet der Katalysator nur bei genügend hohen Temperaturen zuverlässig.

Aufgabe vorliegender Erfindung ist es daher, ein einfaches und wirtschaftliches Verfahren der eingangs genannten Art bereitzustellen, mit dem Acetylen aus der zu zerlegenden Luft entfernt werden kann und welches die oben beschriebenen Nachteile vermeidet.

Diese Aufgabe wird dadurch gelöst, daß Acetylen vor dem Eintritt der Luft in den Wärmetauscher bei einer Temperatur zwischen 70 und 130 °C, vorzugsweise zwischen 80 und 110 °C, katalytisch oxidiert wird, und daß Wasser und Kohlendioxid im wesentlichen in dem Wärmetauscher aus der Luft entfernt werden.

Erfindungsgemäß wird die Acetylenentfernung der Wasser- und Kohlendioxidentfernung vorgeschaltet. Acetylen wird noch vor dem Eintritt der Luft in den Wärmetauscher, d.h. im warmen Teil der Luftzerlegungsanlage, aus der Luft entfernt, während Wasser und Kohlendioxid in umschaltbaren Wärmetauschern Regeneratoren oder Revex, aus der Luft entfernt werden. Dabei wird die Luft vor dem Eintritt in den oder die Wärmetauscher weder durch zusätzliche Einrichtungen erwärmt noch abgekühlt, so daß das Verfahren einfach und kostengünstig zu realisieren ist.

In Tieftemperaturluftzerlegungsanlagen wird die Luft zunächst in einem mehrstufigen Verdichter komprimiert, wobei die Luft nach jeder Verdichtungsstufe zwischengekühlt wird. Erfindungsgemäß wird Acetylen durch eine katalytische Oxidation aus der Luft entfernt. Dabei wird die Luft bei einer Temperatur zwischen 70 und 130 °C, bevorzugt zwischen 80 und 110 °C, dem Katalysator zur Acetylenentfernung zugeführt. Dadurch kann der Katalysator zwischen der letzten Verdichterstufe und dem Nachkühler des Verdichters angeordnet werden. Die Acetylenkonzentration beträgt nach der katalytischen Oxidation weniger als 1 ppb. Die von Acetylen befreite Luft wird anschließend über den Nachkühler in den umschaltbaren Wärmetauscher geleitet, in dem Wasser und Kohlendioxid abgeschieden werden.

Vorteilhaft wird als Katalysator ein Edelmetall auf einem Träger verwendet, da damit Acetylen mit einem hohen Wirkungsgrad aus der Luft entfernt werden kann. Als besonders geeignet haben sich hierbei die Edelmetalle Platin und Palladium auf einem Träger wie z.B. Al₂O₃ erwiesen.

Auch der Einsatz von Metalloxiden, insbesondere von MnO₂, Hopcalit, Co₃O₄, Fe₂O₃ und NiO, oder der Einsatz von Mischungen von Metalloxiden als Katalysator ist von Vorteil, da mit diesen bei den nach dem letzten Verdichter vorliegenden Temperaturen eine gute Acetylenentfernung aus der zu zerlegenden Luft erzielt wird.

Das erfindungsgemäße Verfahren weist deutliche Vorteile gegenüber dem Stand der Technik auf. Die Entfernung des Acetylens im warmen Teil der Luftzerlegungsanlage ist technisch einfacher zu realisieren als im kalten Teil. Die Entfernung kann ohne zusätzliches Aufheizen und/oder Abkühlen der Luft durchgeführt werden, wodurch z.B. auf zusätzliche Wärmetauscher verzichtet werden kann. Hieraus geben sich sowohl bei den Investitionskosten als auch beim Energieverbrauch deutliche Einsparungen. Die Entfernung von Kohlendioxid und Wasser aus der Luft erfolgt in umschaltbaren Wärmetauschern. Der für die Acetylenentfernung vorgesehene Katalysator kann somit vergleichsweise klein dimensioniert werden. Die Erfindung eignet sich insbesondere für sehr große Anlagen und für Anlagen, in denen nur Sauerstoff gewonnen wird.

Bei der Kompression der eingesetzten Luft muß darauf geachtet werden, daß sich die Luft infolge der Kompressionswärme nicht zu stark erwärmt, da ansonsten die effektive Verdichterarbeit überproportional ansteigt. Aus diesem Grund erfolgt die Kompression in der Regel mehrstufig mit dazwischengeschalteten Kühlern, die die Kompressionswärme abführen. Durch die erfindungsgemäße Wahl des Temperaturbereichs zwischen 70 und 130°C kann auf eine Vorerwärmung der Luft vor dem Katalysator verzichtet werden und die Luftverdichtung kann bei niedrigeren Temperaturen durchgeführt werden. Dadurch wird gegenüber den herkömmlichen Verfahren Energie eingespart.

Die Erfindung wird im folgenden anhand der schematischen Zeichnung in einer bevorzugten Ausführungsform beispielhaft beschrieben.

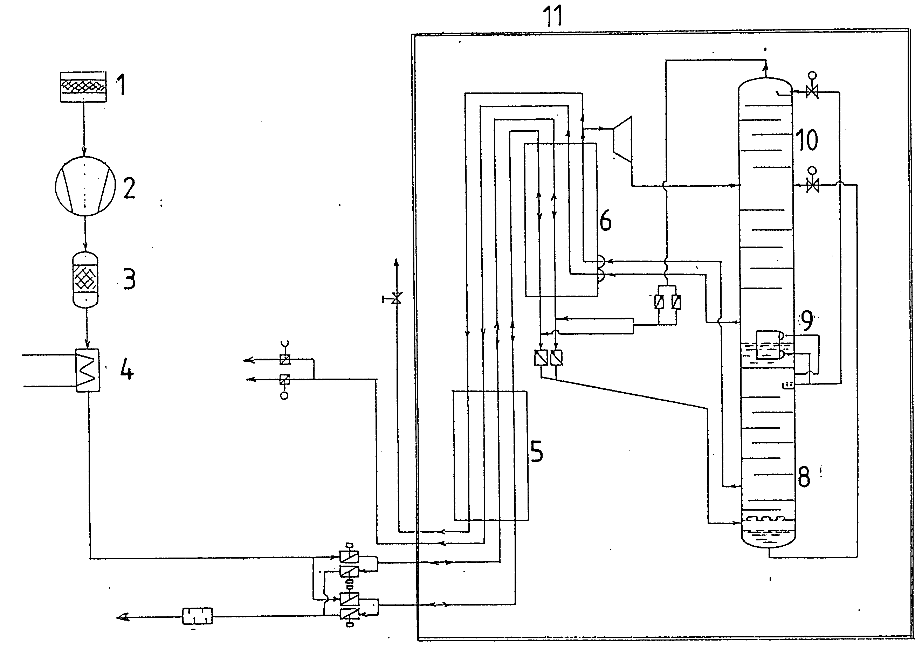

Die einzige Figur zeigt eine Tieftemperaturluftzerlegungsanlage mit Revex und einem Katalysator zur Acetylenentfernung im warmen Teil der Luftzerlegungsanlage.

Die zu zerlegende Luft wird über einen Luftfilter 1 einem Luftverdichter 2 zugeführt. Der Luftverdichter 2 ist mehrstufig ausgeführt, wobei zwischen jeder Verdichtungsstufe eine Zwischenkühlung der Luft erfolgt. Die aus dem Verdichter 2 austretende Luft hat vor der sich anschließenden Nachkühlung eine Temperatur zwischen 80 °C und 110 °C. Der Acetylengehalt beträgt in etwa 10 ppb, kann aber auch bis zu wenigen ppm betragen. Die Luft wird ohne weitere Erwärmung direkt in einen Katalysator 3 geleitet, in dem Acetylen katalytisch oxidiert wird. Als Katalysatormaterial wird Pd auf einem Al₂O₃-Träger eingesetzt. Nach der katalytischen Umsetzung enthält die Luft weniger als 1 ppb Acetylen. Dadurch wird eine Anreicherung von Acetylen im flüssigen Sauerstoff auf gefährliche Konzentrationen vermieden, ohne daß weitere Vorrichtungen zur Acetylenentfernung nötig wären.

Nach dem Katalysator 3 wird die von Acetylen befreite Luft in dem üblichen Nachkühler 4 des Verdichters 2 gekühlt und anschließend dem Revex-Paar 5, 6 zugeführt. In diesen umschaltbaren Wärmetauschern 5, 6 wird die Luft bis auf den Taupunkt abgekühlt, wobei Kohlendioxid und Wasser aus der Luft entfernt werden. Den Revex 5 und 6 schließt sich eine übliche Destillationskolonne mit einer Drucksäule 8, einem Hauptkondensator 9 und einer Niederdruckkolonne 10 an, mit der in bekannter Weise Sauerstoff gewonnen wird. Der gesamte Tieftemperaturteil der Luftzerlegungsanlage befindet sich in einem Coldbox-Mantel 11.

## Patentansprüche

1. Verfahren zur Tieftemperaturluftzerlegung, wobei die Luft verdichtet, in mindestens einem umschaltbaren Wärmetauscher abgekühlt und anschließend in zumindest einer Destillationssäule zerlegt wird, **dadurch gekennzeichnet, daß** Acetylen vor dem Eintritt der Luft in den Wärmetauscher (5) bei einer Temperatur zwischen 70 und 130 °C, vorzugsweise zwischen 80 und 110 °C, katalytisch oxidiert wird, und daß Wasser und Kohlendioxid im wesentlichen in dem Wärmetauscher (5) aus der Luft entfernt werden.

2. Verfahren nach Anspruch 1, dadurch gekennzeichnet, daß als Katalysator (3) ein Edelmetall auf einem Träger verwendet wird.

3. Verfahren nach Anspruch 4, dadurch gekennzeichnet, daß als Katalysator (3) Pd oder Pt auf einem Träger verwendet werden.

4. Verfahren nach einem der Ansprüche 1 oder 3, dadurch gekennzeichnet, daß als Katalysator (3) ein Metalloxid oder Mischungen von Metalloxiden verwendet werden.
